# EUROPEAN PATENT APPLICATION

(11) **EP 0 590 727 A2**
(43) Date of publication of application: **06.04.1994**
(21) Application number: 93202775.8
(22) Date of filing: 28.09.1993
(51) Int. Cl.: B60Q 1/44

(54) **Holder for inertially-activated sensors**

(30) Priority: 01.10.1992 IL 103315
(71) Applicant: BARAN ADVANCED TECHNOLOGIES (86) LTD, Beer-Sheva 84131 (IL)
(72) Inventor: Yeheskel, Menashe, Yavne 70600 (IL); Rosenberg, Armand, Rehovot (IL)
(74) Representative: Perani, Aurelio

(57) **Abstract**

A holder for inertially-activated sensors, comprises: a) a sensor housing holder capable of maintaining the sensor in the desired spatial positioned relationship with respect to the shaft of the acceleration pedal; b) positioning means to position the holder at the desired location on the shaft of the acceleration pedal; c) connection means to connect the said sensor housing to the said positioning means in the desired positioned relationship with the acceleration pedal shaft and other parts of the vehice; and d) mechanical isolation means, provided within, or coupled to, the said connection means, to isolate the sensor from secondary shocks felt by the acceleration pedal shaft, while keepig it in kinematic relationship therewith.

## Description

### Field of the Invention

The present invention relates to inertially-activated sensors. More particularly, the invention relates to an improvement by means of which it is possible to obtain a so-called mechanical isolation of such sensors from the body to which they are kinematically connected.

### BACKGROUND OF THE INVENTION

Inertially-activated sensors are well known in the art. These comprise sensors which generate an electric signal when a moving object to which they are connected reaches certain kinematic conditions, e.g., a certain acceleration or a sudden stop. The mechanical trigger to the generation of a signal may be, e.g., a bending of a leaf-like element, or an impact of a body on the sensor. Illustrative (but non-limitative) examples of inertially-activated sensors are the piezoelectric sensors. Such sensors are activated by a change in the physical conditions of the pizoelectric film, as a result of which they generate an electric signal which is proportional to the said change in physical properties and which, therefore, can be used to signal that a predetermined condition has been reached, and/or to actuate other systems (e.g., brakelights).

### The Prior Art

Broadly speaking, piezoelectric sensors can be divided into two categories: 1) Force-sensing resistors (FSR); and 2) Impact-sensing elements (ISE).

In the copending EP Application No. 92200430.4 of the same applicants herein, there is described an early brakelight activation system, which is based on an FSR, and which comprises a bending sensor encased within a housing connected to the accelerator shaft, which bends when the accelerator pedal is brought to a brusque and sudden halt. Thus, in such a situation, the FSR bends and generates a signal which is interpreted by the system as a potential prelude to a brusque braking, and therefore lights up the brake lights before the brake pedal is actually pressed. This system, while being very effective, has the drawback that the signal generated under non-braking conditions, (e.g., when the acceleration pedal is violently pushed down in order to obtain a quick acceleration) is not distinguishable from the signal generated when the same pedal is suddenly released as a prelude to braking, leading to the need for additional filtering and other electronic arrangements in order to avoid false system actuations. These additional means render the system more expensive and complicated, but according to the known art cannot be dispensed with.

EP 0360167 teaches a similar system in which an ISE is used to generate the signal. This system has the considerable drawback of needing separate parts, whereby the ISE is positioned on the wall of the car and the impacting portion is positioned on the pedal shaft. This, as will be appreciated by the skilled person, renders the system impracticable because its installation is difficult and must be very accurate. On the other hand, the ISE requires a considerable impact in order to generate the required signal. EP 0219858 relates to a device which must be mounted on the pedal itself.

Furthermore, certain vehicles have accelerator pedals and shafts which are not provided with a mechanical stopper. Accordingly, no impact exists when the pedal is suddenly released, and therefore it is necessary to relie on additional means, as described hereinafter, in order to be able to transmit an impact to a sensor.

It is therefore clear that it would be highly desirable to be able to provide means which improve the output of the inertially-activated sensors, in order to provide a correct signal without reverting to comlicated and expensive solutions.

It is an object of the invention to provide a device which permits to achieve said goals and to overcome the drawbacks listed above.

It is another object of the invention to provide a method which permits mechanically to isolate the moving parts to which sensors are applied, from sensors of different types, thereby preventing undesired activation of the sensor. Other objects of the invention will become apparent as the description proceeds.

### SUMMARY OF THE INVENTION

In one of its forms, the invention is directed to a holder for inertially-activated sensors, particularly for early brakelight activation systems, comprising:
a) a sensor housing holder capable of maintaining the sensor in the desired spatial positioned relationship with respect to the shaft of the acceleration pedal;
b) positioning means to position the holder at the desired location on the shaft of the acceleration pedal;
c) connection means to connect the said sensor housing to the said positioning means in the desired positioned relationship with the acceleration pedal shaft and other parts of the vehice;
d) mechanical isolation means, provided within, or coupled to, the said connection means, to isolate the sensor from secondary shocks felt by the acceleration pedal shaft, while keepig it in kinematic relationship therewith.

By "inertially-activated sensors" is meant to indicate all sensors which are activated as the result of the movement of an object associated with the sensor, whether the activation is caused by the acceleration (or deceleration) of the said object, or by the impact between the sensor and a "hammer", wherein at least one of the sensor and the hammer is connected to the moving object to the extent that they are displaced together.

"Mechanical isolation means" are means which prevent the secondary shocks felt by the acceleration pedal shaft from being transmitted on to the sensor. These mechanical isolation means may coprise - but are not limited to - e.g., springs, shock absorbers, rubber interfaces, etc. Secondary shocks, as used herein, refers to all kinds of shocks which are not related to the sudden release of the accelerator pedal, and may include, e.g., sudden depression of th pedal for acceleration purposes, jumps of the vehicle due to road imperfections, etc.

By maintaining "kinematic relationship" is meant to indicate that the holder of the invention is connected to the acceleration pedal shaft, through the mechanical isolation means, in a manner which causes it to move at the same speed as the accelerator pedal shaft, at the point where they are connected, while at the same time being mechanically isolated therefrom.

According to a preferred embodiment of the invention, the positioning means comprise clamping means. In an alternative preferred embodiment of the invention the positioning means comprise one or more strips, which may be of metal, plastic, or any other suitable metarial. Such strips are in common use in the art. One example of such strips is that manufactured by Panduit Electrical Group, U.S.A., under the "part no. PLT2S".

In another preferred embodiment of the invention the positioning means comprise a basis made of elastic material, which basis can be caused at least partially to envelope the shaft of the acceleration pedal.

The actual shape and nature of the sensor housing is not important, and it has the sole purpose of keeping the sensor securely in place, in the desired positioned relationship with respect to the accelerator. In a preferred embodiment of the invention the sensor housing comprises a spring, which keep the sensor pressed against the body of the housing and thus prevents its undesired movement. Alternatively, the sensor housing may comprise any other suitable positioning means, e.g., clamping means.

The elastic connection means can be of may varied shapes, types and materials, Its purpose is to minimize rigid connection between the moving element (typically, the pedal shaft, through the positioning means) and the sensor. Therefore, as will be appreciated by the skilled person, countless such connections can be devised.

According to a preferred embodiment of the invention the elastic connection means comprise a spring. According to another preferred embodiment of the invention the elastic connection means is made of elastic material.

In a particular embodiment of the invention the sensor housing, the positioning means and the connecting means are made of one piece of elastic material. The elastic material can be any suitable material, e.g., rubber.

Also encompassed by the invention is a method of increasing the electrical signal generated by an inertially-activated signal generator, comprising providing a substantially elastic connection between the said sensor and the moving part the inertia of which it is desired to use in order to generate the signal.

The method is particularly useful, as detailed above, when the moving part is a pedal or pedal shaft and the inertially activated signal generator is a piezoelectric transducer, no matter whether the piezoelectric transducer generates a signal by bending or by impact.

Another advantage of the invention, as compared with prior art devices, is that no matter what is the shape and size of the accelerator pedal and pedal shaft, it is possible to install the sensor thereon simply and easily.

All the above and other characteristics and advantages of the invention will be better understood through the following description of illustrative and non-limitative preferred embodiments.

### Brief Description of The Drawings

Fig. 1 shows a prior art arrangement.
Figs. 2 and 3 illustrate two holders according to two preferred embodiments of the invention;
Figs. 4 and 5 schematically illustrate the activation of two different ISEs;
Fig. 6 schematically shows how the holder of Fig. 1 is mounted on an accelerator pedal shaft;
Fig. 7 shows a holder according to another preferred embodiment of the invention;
Fig. 8 shows a way of connecting a holder which is a slight modification of the holder of Fig. 7;
Fig. 9 shows a holder according to another preferred embodiment of the invention;
Fig. 10 illustrates a sensor housing holder according to a preferred embodiment of the invention.

### Detailed Description of Preferred Embodiments

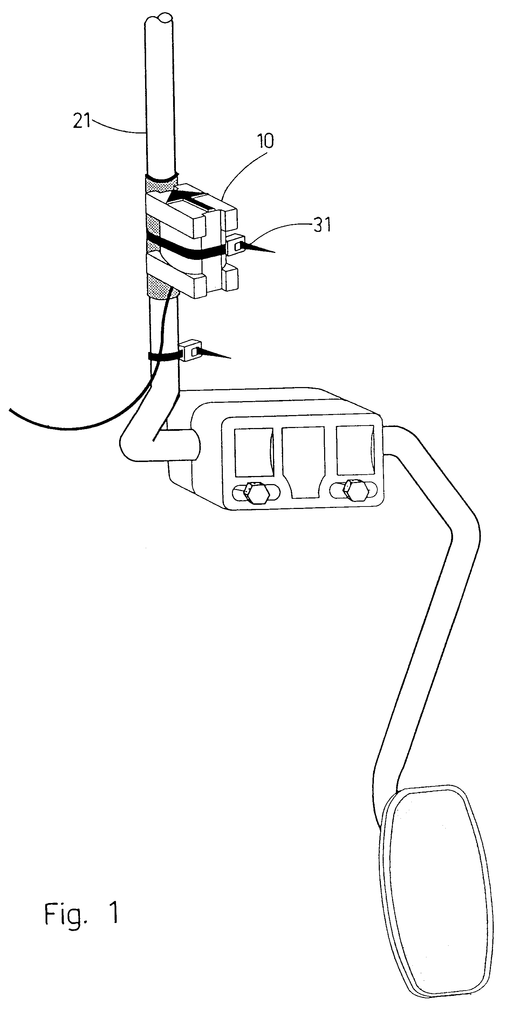

In Fig. 1 a prior art arrangement is shown, where a sensor 10 is directly connected to the accelerator pedal shaft, 21, by means of strip 31. It can be easily seen from the figure that the sensor 10 is both in mechanical and in kinematic relationship with the shaft, and in fact behaves as a part of shaft 21 for all practical purposes.

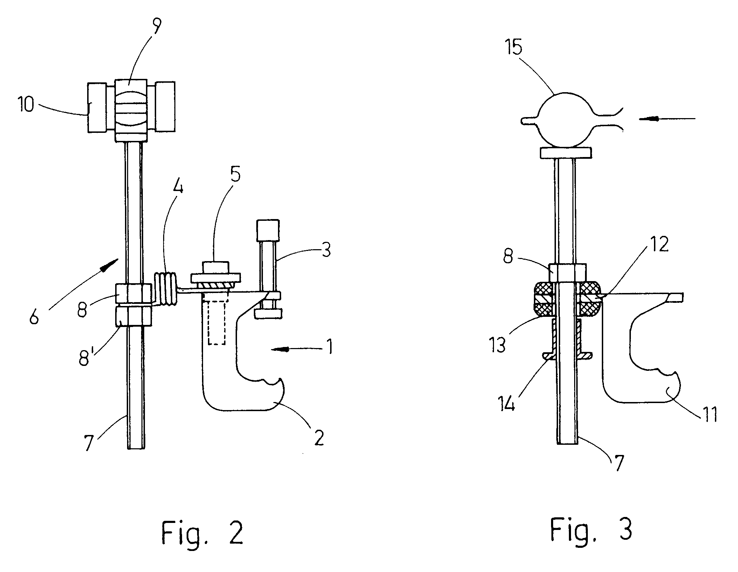

Looking now at Fig. 2, numeral 1 generally indicates the positioning means which, according to this embodiment, comprise a clamp made of a main body 2 and a screw 3. The accelerator pedal shaft is embraced by this clamp and the whole holder is thus kept securely in place.

In this particular embodiment of the invention the elastic connection is obtained by providing spring 4, connected on the one hand to the main body 2 of the clamp, via a connection which in the figure is shown as a screw 5, and on the other hand to the sensor housing 6.

In this particular embodiment of the invention, the sensor housing 6 comprises an elongated portion 7, on which there are positioned two nuts, 8 and 8' which hold spring 4 in place with respect to portion 7. Elastic clamping means 9 are used to keep sensor 10 securely in place.

Fig. 3 shows a device which is similar to that of Fig. 2 (screw 3 being omitted for the sake of simplicity), in which the elastic connection is achieved in a different manner. Here clamp 11 is provided with a ring 12 which fits into a groove provided in a rubber sleeve 13. The rubber sleeve 13 is mounted on elongated portion 7, and is kept in place by stopper means 14 and nut 8, where stopper means 14 prevent nut 8 from applying too great a pressure on ring 12, which is made of rubber or other resilient material. In this arrangement, the elongated portion 7 (and the sensor attached thereto) are free to move respective to clamp 11, due to the elastic nature of sleeve 13.

In this figure a differently shaped spring 15 is shown, into which the sensor can be assembled by applying pressure in the direction of the arrow. The spring 15 keeps the sensor 10 pressed towards the top of the elongated portion 7, and therefore helps in passing the impact from elongated portion 7 on to sensor 10.

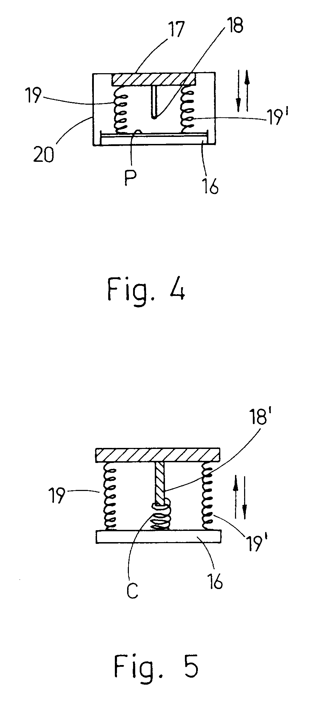

The arrangement shown in the figures can be used with FSR, ISE and other suitable sensors, such as electromagnetic sensors (ES). The operation of the FSR is self-evident: the movement of the accelerator shaft causes a movement of the holder, which is accentuated due to the particular construction of the invention, and the inertia is transmitted to the FSR within the sensor, which bends and generates an electric signal. In order to illustrate a possible arrangement to be used with ISE, reference is made to Fig. 4, which is a cross-section of a sensor, where a piezoelectric film "P" is seen, positioned on a basis 16, above which a weight-and-hammer combination 17 is suspended, the point 18 of the hammer being kept away from the ISE by the action of two fsprings 19 and 19'. A frame 20 is provided in order to keep the various parts in mounted relationship. When a brusque movement is transmitted to the weight 17 by the holder, it moves rapidly downwards and hits the ISE at the predetermined place, thus generating the electric signal. The weight is then returned to its place by the action of springs 19 and 19'.

Similarly, with an ES, as shown in Fig. 5, the situation is similar, with the difference that the signal is not generated by impact, but by the movement of moving metallic core 18' within coil "C".

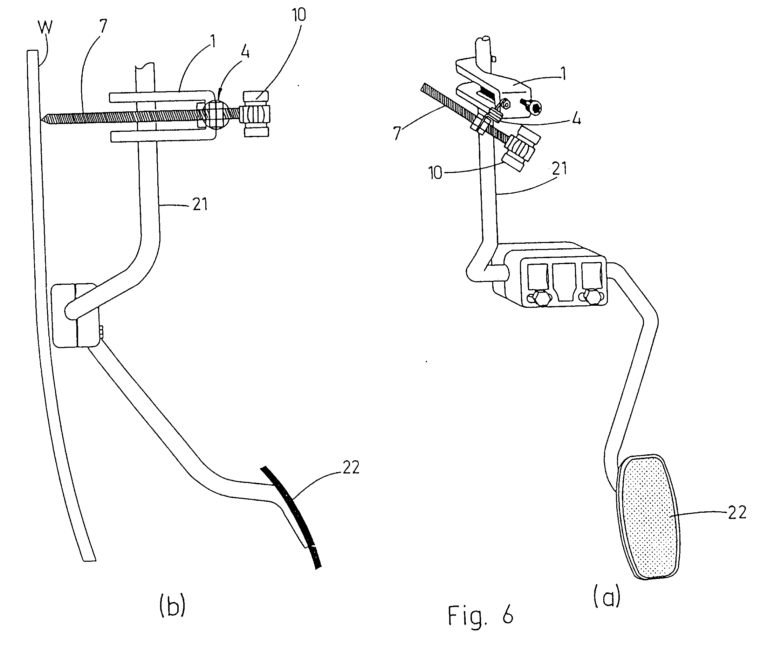

Fig. 6 schematically shows the installation of the device of Fig. 2. Clamp 1 is mounted on shaft 21 and the whole device is displaced as the pedal 22 is caused to chnge its position. Elongated element 7 is in contact with the wall "W" of the vehicle (which is the wall that separates the cabin of the vehicle from the engine), when the pedal is at rest, and impacts thereon when the pedal is suddenly released. The impact is thus wholly transmitted to the sensor 10 and, due to the mechanical isolation, little or no impact is lost trhough forces transmitted to the pedal. Electric connections originating from the sensor 10 are not shown in the figures for the sake of simplicity, but it is clear that they can conveniently be led along the pedal to their final destination (viz., to the activation of the brake lights), as shown, e.g., in Fig. 1.

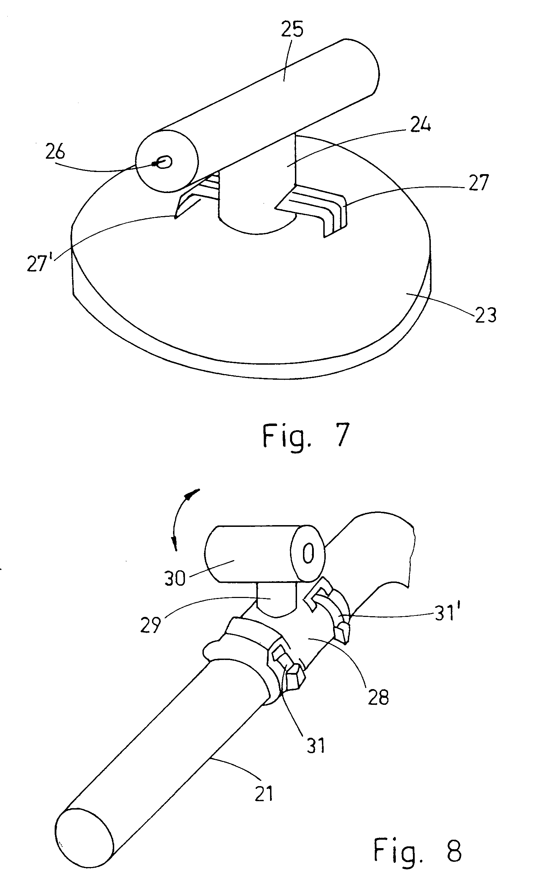

Fig. 7 schematically illustrates a holder according to a different embodiment of the invention, which is made of three pieces. This holder has a basis 23, an elastic connection 24, and a tubular end, 25, provided with a central hole, 26, through which the elongated element (e.g., 7 of Fig. 2), can be introduced. This elongated element can typically be a screw. The role of the tubular end 26 is essentially the same as that of the end of spring 4, in Fig. 2, together with the nuts 8 and 8', and actually elastic connection 24 of Fig. 7 acts as the spring 4 of Fig. 2. Tubular element 25 can rotate arount the axis of elestic connection 24, as it comprises a protrusion which matches an inner cavity within connection 24 (not shown). Thus, it is possible to position the tubular end 26 in any desired direction. Tightening the holder on the shaft, as described below, causes a pressure to be created on the connections between element 25 and connection 24, rendering any further mutual rotation between the two impossible. The constructional details of such engamegents and connections are within the scope of the routineer, and therefore are not described herein in detail, for the sake of brevity.

Two shoulders 27 and 27' are provided, which are usd as stopping means for connecting bands which can be used to connect it to the shaft. These shoulders can be made to leave ample space for the bands, so that the whole holder can be rotated by a substantial angle, in the mounted position. This is important in order to be able to position the sensor in the direction in which the sensor will be subject to the maximal force available.

A device similar to that of Fig. 7 is shown in the mounted position in Fig. 8, the difference being that the shoulders 27 and 27' are omitted. Here, again, the device is made of two pieces: the basis 28 is provided with a hole trough which eastic connection 29 is caused to pass. The elastic connection 29 (as well as the tubular end 30 thereof) can thus be rotated by 360°, in order to position the sensor in the desired position. Once the bands 31 and 31' are strongly secured, the pressure of basis 28 on the end part of elastic connection 29 will prevent its further rotation away from the chosen position.

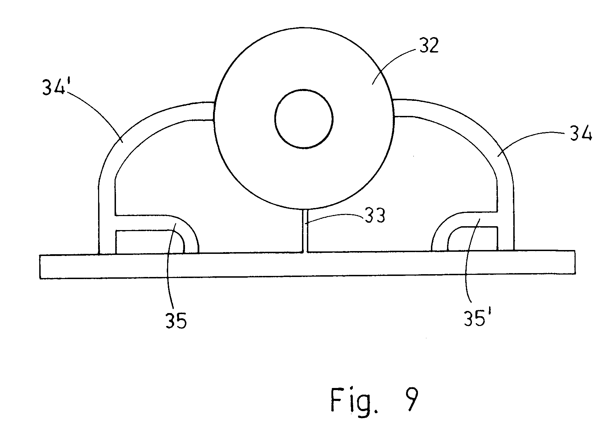

Fig. 9 shows in front view a holder according to another preferred embodiment of the invention. This holder is made of a single piece and can be easily produced, e.g., by injection or molding, and therefore is convenient inasmuch as it has no moving parts, or parts to be assembled. In order to reduce rigid connection between the shaft and the sensor as much as possible, the various parts of the holder are connected to one another in different points. This, the tubular end 32 is connected to a first elastic connection 33, positioned centrally, and to two additional lateral elastic connections 34 and 34', positioned laterally. Shoulders 35 and 35' are provided, which have substantially the same role as shoulders 27 and 27' of Fig. 7.

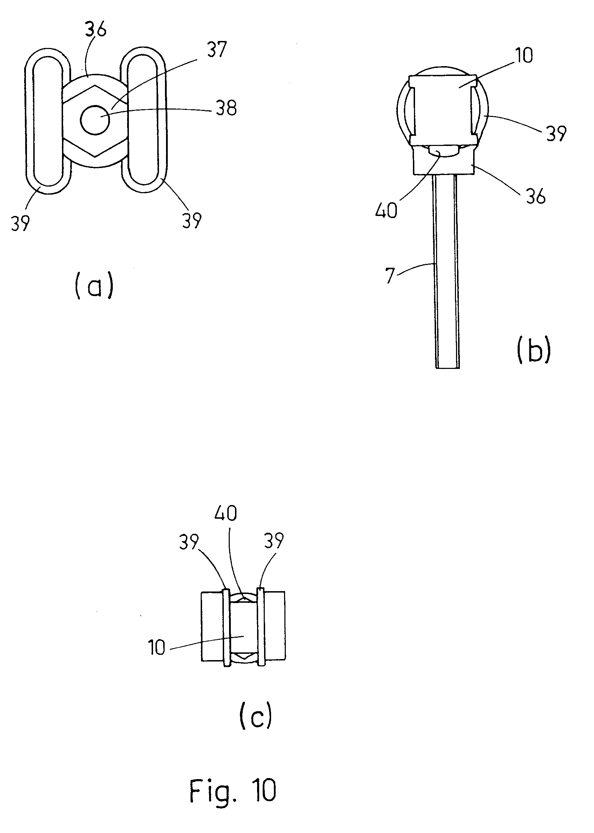

Fig. 10 illustrates a sensor housing holder according to a preferred embodiment of the invention. This device is made of elastic material, e.g., neoprene. It comprises (Fig. 10(a)) a basis 36, in which a depression 37 is created, to house the head of an elongated element (e.g., 7 of Fig. 2), and a hole 38 through which the elongated element passes. Two elastic rings 39 are provided, which will hold the sensor in place and push it toward the head 40 of the elongated element 7, thereby effectively transmitting the impact on to the sensor. Figs. 10(b) and 10(c) show the device in mounted position, and it can be seen that the rings 39 have been caused to pass around sensor 10, and by their elastic action they keep it pressed towards basis 36.

All the above description of preferred embodiments has been provided for the purpose of illustration, and is not meant to limit the invention in any way. As will be apparent to the skilled person, many modifications cane be effected in the various parts, shapes and materials of the holder, and the advantages of the invention will still be retained. Any modification which retains the characteristics described herein, although the final shape may be different, different sensors may be employed, or they can be used for different purposes, does not exceed the scope of the invention.

## Claims

1. A holder for inertially-activated sensors, comprising:
a) a sensor housing holder capable of maintaining the sensor in the desired spatial positioned relationship with respect to the shaft of the acceleration pedal;
b) positioning means to position the holder at the desired location on the shaft of the acceleration pedal;
c) connection means to connect the said sensor housing to the said positioning means in the desired positioned relationship with the acceleration pedal shaft and other parts of the vehice;
d) mechanical isolation means, provided within, or coupled to, the said connection means, to isolate the sensor from secondary shocks felt by the acceleration pedal shaft, while keepig it in kinematic relationship therewith.

2. A holder according to claim 1, wherein the positioning means comprise clamping means.

3. A holder according to claim 1, wherein the positioning means comprise one or more plastic strips.

4. A holder according to any one of claims 1 to 3, wherein the positioning means comprise a basis made of elastic material, which basis can be caused at least partially to envelope the shaft of the acceleration pedal.

5. A holder according to claim 1, wherein the sensor housing holder comprises a spring.

6. A holder according to claim 1, wherein the sensor housing holder comprises clamping means.

7. A holder according to any one of claims 1 to 6, wherein the elastic connection means comprise a spring.

8. A holder according to any one of claims 1 to 6, wherein the elastic connection means is made of elastic material.

9. A holder according to claim 1, wherein the sensor housing holder, the positioning means and the connecting means are made of one piece of elastic material.

10. A holder according to claim 8 or 9, wherein the elastic material is rubber.

11. A method of increasing the electrical signal generated by an inertially-activated signal generator, comprising providing a substantially elastic connection between the said sensor and the moving part the inertia of which it is desired to use in order to generate the signal.

12. A method according to claim 11, wherein the moving part is a pedal or pedal shaft.

13. A method according to claim 11 or 12, wherein the inertially activated signal generator is a piezoelectric transducer.

14. A method according to claim 13, wherein the piezoelectric transducer generates a signal by bending.

15. A method according to claim 13, wherein the piezoelectric transducer geberates a signal by impact.

16. A method of increasing the electrical signal generated by an inertially-activated signal generator, essentially as described and illustrated.

17. An early brakelight activation system, comprising in combination an inertially-activated sensor and a holder according to any one of claims 1 to 10.

18. A holder for inertially activated sensors of early brakelight activation systems, essentially as described and illustrated.
